# DEMANDE DE BREVET EUROPEEN

(11) **EP 3 865 723 A1**
(43) Date de publication de la demande: **18.08.2021**
(21) Numéro de dépôt: 21156100.6
(22) Date de dépôt: 09.02.2021
(51) Int. Cl.: F16C 33/78, F16C 41/00, F16C 43/04, F16C 19/18

(54) **PALIER À ROULEMENT**

(30) Priorité: 13.02.2020 FR 2001441
(71) Demandeur: NTN-SNR ROULEMENTS, 74000 Annecy (FR)
(72) Inventeur: CURTET, Alexandre, 73410 Saint Girod (Entrelacs) (FR); DESNOYER, Fabien, 74000 Annecy (FR); GOPEE, Sameer, 74150 Vallières (FR)
(74) Mandataire: Sayettat, Julien Christian

(57) **Abrégé**

L'invention concerne un palier à roulement dont au moins un côté de l'espace de roulement est équipé d'un dispositif d'étanchéité (7) comprenant une armature interne (8) et une armature externe (9) formant entre elle une chambre annulaire (10) en communication avec, d'une part, l'espace de roulement par une ouverture interne (11) et, d'autre part, avec l'extérieur par une ouverture externe (12), ladite armature externe présentant une portion centrale (9b) reliée, d'une part, à une portion intérieure (9a) de fixation à l'organe (2) et, d'autre part, à une portion extérieure (9c), la portion extérieure (9c) présentant un segment extérieur (21) qui s'étend axialement entre une extrémité interne (22) et une extrémité libre (17) en délimitant intérieurement l'ouverture externe (12), ladite extrémité libre étant inscrite dans un plan radial (P1) qui est décalé du côté externe par rapport à un plan radial (P2) dans lequel est inscrite une face externe (15b) de la portion centrale (9b).

## Description

L'invention concerne un palier à roulement comprenant deux organes, respectivement intérieur et extérieur, et des corps roulants disposés dans un espace de roulement formé entre lesdits organes pour permettre leur rotation relative autour d'un axe, ainsi qu'un procédé de montage d'un dispositif d'étanchéité dans un côté de l'espace annulaire d'un tel palier à roulement.

En particulier, l'invention s'applique aux paliers à roulement de véhicule automobile, notamment aux paliers de roue. De façon avantageuse, un palier suivant l'invention permet le montage d'une roue motrice ou non motrice de véhicule automobile, l'organe intérieur étant tournant et comprenant des moyens de fixation de la roue tandis que l'organe extérieur est fixe et comprend des moyens de fixation sur un élément de suspension du véhicule.

Pour empêcher d'une part les fuites de lubrifiant présent dans l'espace de roulement et d'autre part la contamination dudit espace avec des polluants extérieurs, au moins un côté de l'espace de roulement peut être équipé d'un dispositif d'étanchéité.

En particulier, chacun des côtés de l'espace de roulement peut être équipé d'un dispositif d'étanchéité comprenant deux armatures rigides solidaires respectivement d'un organe, une desdites armatures étant équipée d'un élément d'étanchéité comprenant au moins une lèvre en contact frottant sur une portée de l'autre armature.

Selon un type de réalisation, les armatures forment entre elles une chambre annulaire en communication avec, d'une part, l'espace de roulement par une ouverture interne et, d'autre part, avec l'extérieur par une ouverture externe.

Le palier peut également être équipé d'un codeur qui est solidarisé à l'organe tournant en étant disposé d'un côté de l'espace de roulement. Un tel palier, lorsqu'il est équipé d'un système capteur de vitesse de rotation, de position angulaire et/ou de sens de rotation, peut notamment être employé pour le montage d'une roue de véhicule automobile qui est pourvu d'un système embarqué d'antiblocage de ladite roue et/ou de contrôle global du châssis. En effet, les informations délivrées par le codeur peuvent alors être utilisées par un calculateur d'un tel système ainsi que par tout autre système embarqué utilisant la mesure de vitesse des roues comme donnée d'entrée.

Pour ce faire, l'un des dispositifs d'étanchéité prévus sur respectivement un côté de l'espace de roulement peut être équipé d'un tel codeur, l'autre dispositif d'étanchéité étant dépourvu d'un tel codeur.

En particulier, l'armature externe du dispositif d'étanchéité peut présenter une portion centrale reliée, d'une part, à une portion intérieure de fixation à l'organe correspondant du palier et, d'autre part, à une portion extérieure délimitant l'ouverture externe, le codeur étant associé sur la face externe de ladite portion centrale.

Dans les paliers à roulement connus, le codeur s'étend également sur la portion extérieure de sorte que la géométrie de l'ouverture externe dépend de celle du codeur, et plus généralement de la présence ou non dudit codeur sur l'armature externe.

Il en résulte que les performances d'étanchéité du dispositif dépendent de la géométrie du codeur, et ne sont notamment pas les mêmes lorsque deux dispositifs d'étanchéité de même structure sont montés sur respectivement un côté d'un espace de roulement et qu'un seul de ces dispositifs est équipé d'un codeur.

Par ailleurs, pour le montage du dispositif d'étanchéité dans le côté de l'espace de roulement, en fonction de la présence et de la géométrie du codeur, il est nécessaire d'avoir recours à un outil spécifique pour appliquer un effort de déplacement axial de l'armature sur une course de fixation sur l'organe.

L'invention vise à perfectionner l'art antérieur en proposant notamment un palier à roulement dont l'étanchéité d'au moins un côté de l'espace de roulement est assurée par un dispositif dont le montage et les performances d'étanchéité ne sont pas affectés par la présence ou non d'un codeur sur ledit dispositif, permettant ainsi notamment d'obtenir et de faciliter le montage d'un palier équipé d'un codeur en présentant une étanchéité analogue au niveau de chacun des côtés de son espace de roulement.

A cet effet, selon un premier aspect, l'invention propose un palier à roulement comprenant deux organes et des corps roulants disposés dans un espace de roulement formé entre lesdits organes pour permettre leur rotation relative autour d'un axe, au moins un côté de l'espace de roulement étant équipé d'un dispositif d'étanchéité comprenant une armature interne et une armature externe, lesdites armatures étant solidaires de respectivement un organe en formant entre elle une chambre annulaire en communication avec, d'une part, l'espace de roulement par une ouverture interne et, d'autre part, avec l'extérieur par une ouverture externe, ladite armature externe présentant une portion centrale reliée, d'une part, à une portion intérieure de fixation à l'organe et, d'autre part, à une portion extérieure, la portion extérieure présentant un segment extérieur qui s'étend axialement entre une extrémité interne et une extrémité libre en délimitant intérieurement l'ouverture externe, ladite extrémité libre étant inscrite dans un plan radial qui est décalé du côté externe par rapport à un plan radial dans lequel est inscrite une face externe de la portion centrale.

Selon un deuxième aspect, l'invention propose un procédé de montage d'un dispositif d'étanchéité dans un côté de l'espace annulaire d'un tel palier à roulement, dans lequel les armatures sont préassemblées en formant entre elles la chambre annulaire, et, après disposition desdites armatures préassemblées en regard axial dudit côté, un outil est mis en appui sur une portion intérieure de l'armature externe et sur l'armature interne pour appliquer un effort de déplacement axial desdites armatures dans ledit côté sur une course de fixation de chacun desdites armatures à un organe.

D'autres objets et avantages de l'invention apparaîtront dans la description qui suit, faite en référence aux figures annexées, dans lesquelles :
- la figure 1 est une représentation schématique en coupe axiale partielle d'un palier à roulement selon un mode de réalisation de l'invention ;
- les figures 2a et 2b représentent schématiquement en coupe axiale partielle le dispositif d'étanchéité équipant le côté gauche du palier à roulement de la figure 1, la figure 2b étant un agrandissement de la figure 2a centré sur l'ouverture externe dudit dispositif d'étanchéité, ledit dispositif d'étanchéité étant dépourvu de codeur ;
- la figure 3 représente schématiquement en coupe axiale partielle le dispositif d'étanchéité équipant le côté droit du palier à roulement de la figure 1, ledit dispositif d'étanchéité étant équipé d'un codeur ;
- les figures 4a, 4b et 5a, 5b sont des vues analogues de respectivement les figures 2a et 3, et représentent chacune un dispositif d'étanchéité selon respectivement une variante de réalisation de l'invention, respectivement sans (figure 4a, 5a) et avec un codeur (figure 4b, 5b) ;
- les figures 6a et 6b représentent schématiquement en coupe longitudinale partielle le montage du dispositif d'étanchéité de respectivement la figure 4a et la figure 4b sur un côté d'un palier à roulement.

En relation avec ces figures, on décrit ci-dessous un palier à roulement, en particulier pour le montage d'une roue motrice ou non motrice d'un véhicule automobile.

Le palier présente deux organes, respectivement extérieur 1 et intérieur 2, montés en rotation relative autour d'un axe par l'intermédiaire d'au moins une rangée de corps roulants 3 qui est disposée dans un espace de roulement 4 formé entre lesdits organes. Dans la description, les termes « extérieur » et « intérieur » sont définis par rapport à l'axe de rotation du palier (horizontal sur les figures), respectivement pour une localisation éloignée et proche dudit axe.

Dans le mode de réalisation représenté, l'organe extérieur 1 est destiné à être fixe en étant associé par exemple à un élément de suspension du véhicule et l'organe intérieur 2 est destiné à être tournant avec la roue. Toutefois, l'invention peut s'appliquer à une autre configuration de palier à roulement comprenant deux organes 1, 2 en rotation relative, éventuellement destiné à une autre application que le montage d'une roue de véhicule automobile.

Le palier représenté comprend deux rangées de billes 3 qui sont espacées axialement, lesdites rangées étant chacune disposées entre deux pistes de roulement 1a, 2a formées sur respectivement un organe 1, 2 pour guider la rotation de l'organe tournant 2. Plus précisément, l'organe tournant 2 comprend deux bagues 5 sur chacune desquelles est formée une piste de roulement intérieure 2a.

Toutefois, l'invention n'est pas limitée à un mode de réalisation du palier, en particulier relativement à la géométrie des corps roulants 3, à la géométrie et/ou à la disposition relative des organes fixe 1 et tournant 2.

Au moins un côté 6 de l'espace de roulement 4 est équipé d'un dispositif d'étanchéité 7 pour empêcher, d'une part, les fuites de lubrifiant présent dans l'espace de roulement 4 et, d'autre part la contamination dudit espace avec des polluants extérieurs, notamment à base de boues.

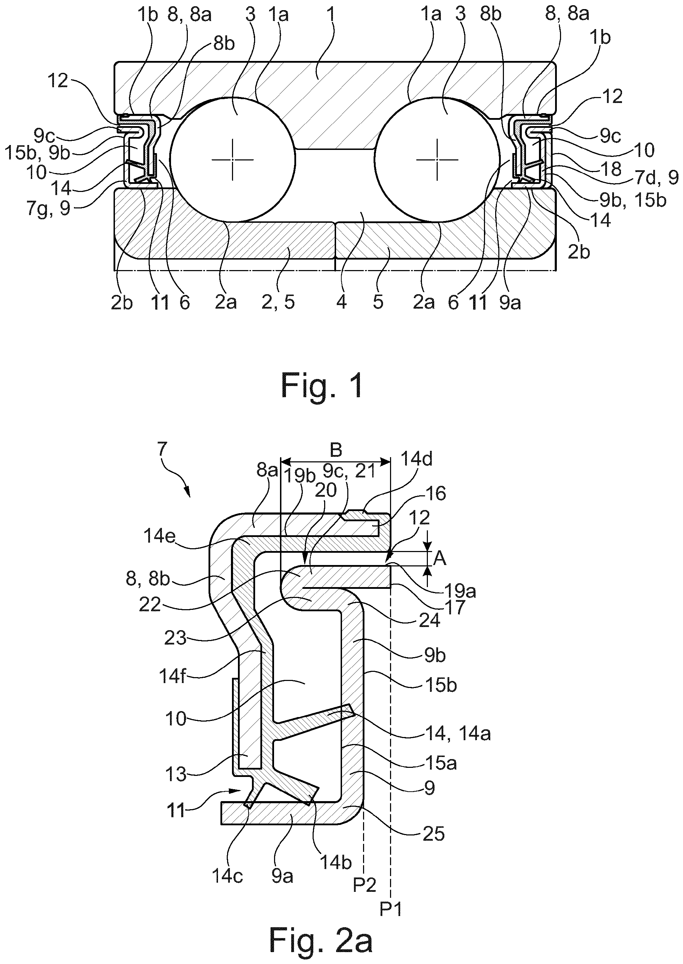

Sur la figure 1, chaque côté 6 de l'espace de roulement 4 est formé entre deux parois sensiblement axiales 1b, 2b de respectivement un organe 1, 2, lesdites parois s'étendant chacune dans le prolongement externe de respectivement une piste de roulement 1a, 2a. En outre, le palier à roulement comprend deux dispositifs d'étanchéité 7, chaque côté 6 de l'espace de roulement 4 étant équipé d'un desdits dispositifs d'étanchéité.

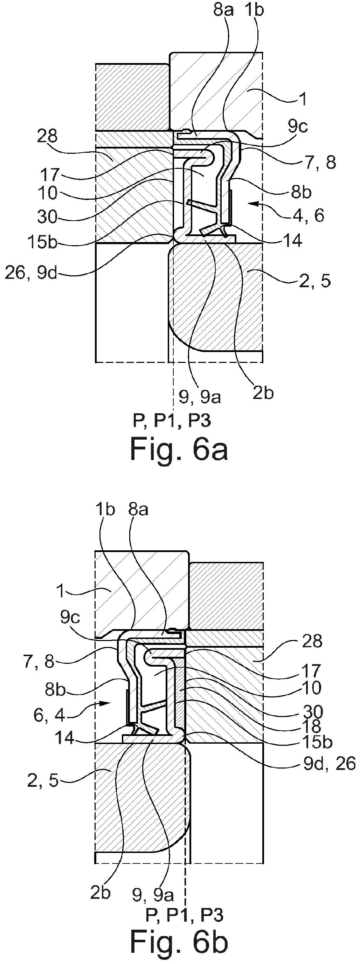

Dans la description, les termes « interne » et « externe » sont pris en référence au palier à roulement, notamment tel que représenté sur les figures 1, 6a et 6b.

Le dispositif d'étanchéité 7 comprend deux armatures rigides interne 8 et externe 9 solidaires de respectivement un organe 1, 2, lesdites armatures pouvant être réalisées en matériau métallique, notamment par pliage d'une tôle emboutie.

De façon avantageuse, les paliers à roulement respectifs de la figure 1 et des figures 6a, 6b comprennent deux dispositifs d'étanchéité 7 présentant les mêmes armatures respectivement externes 9 et internes 8, ce qui permet de faciliter l'assemblage desdits paliers, notamment en pouvant utiliser les mêmes outils pour monter chacun de leurs dispositifs d'étanchéité.

L'armature interne 8 présente une portion extérieure 8a sensiblement axiale de fixation à l'organe extérieur 1, ladite portion extérieure étant emmanchée sur la paroi axiale extérieure 1b du côté 6. De même, l'armature externe 9 présente une portion intérieure 9a sensiblement axiale de fixation à l'organe intérieur 2, qui est emmanchée sur la paroi axiale intérieure 2b du côté 6.

Les armatures 8, 9 forment entre elles une chambre annulaire 10 en communication avec, d'une part, l'espace de roulement 4 par une ouverture interne 11 et, d'autre part, avec l'extérieur par une ouverture externe 12.

En particulier, l'armature interne 8 présente une portion intérieure 8b s'étendant sensiblement radialement depuis une extrémité interne de la portion 8a de fixation à l'organe 1, ladite portion intérieure présentant une extrémité intérieure libre 13 qui est disposée en regard radial de la portion 9a de fixation de l'armature externe 9 à l'organe 2, afin de délimiter avec ladite portion de fixation l'ouverture interne 11 de la chambre 10.

Par ailleurs, l'armature externe 9 présente une portion centrale 9b sensiblement radiale reliée, d'une part, à la portion intérieure 9a de fixation à l'organe 2 et, d'autre part, à une portion extérieure 9c sensiblement axiale, la portion centrale 9b délimitant axialement la chambre annulaire 10 avec la portion intérieure 8b de l'armature interne 8.

L'armature interne 8 porte un élément d'étanchéité 14 qui est disposé dans la chambre annulaire 10, ledit élément présentant au moins une lèvre 14a, 14b, 14c qui est disposée en contact frottant sur l'armature externe 9.

En particulier, l'élément d'étanchéité 14 présente :
- au moins une lèvre 14a en contact frottant sur une face interne 15a de la portion centrale 9b de l'armature externe 9 ; et/ou
- au moins une lèvre 14b, 14c en contact frottant sur la portion 9a de fixation de l'armature externe 9.

Dans les modes de réalisation représentés, l'élément d'étanchéité 10 présente :
- une lèvre extérieure 14a en contact frottant sur la face interne 15a de la portion centrale 9b ; et
- deux lèvres intérieures respectivement externe 14b et interne 14c en contact frottant en deux points espacés axialement de la portion de fixation 9a.

En outre, l'élément d'étanchéité 14 présente un bourrelet 14d qui est disposé en appui sur l'organe extérieur 1 pour former étanchéité statique. En particulier, la portion extérieure 8a présente un bord libre 16 qui est décalé radialement, afin de permettre un contact entre le bourrelet 14d et la paroi axiale extérieure 1b qui soit garant de l'étanchéité statique.

L'élément d'étanchéité 14 peut être associé par surmoulage à l'armature interne 8. En particulier, l'élément d'étanchéité 14 peut être réalisé en matériau souple, par exemple en élastomère, notamment à base de copolymère butadiène nitrile (NBR), éventuellement renforcé mécaniquement par des charges telles que du noir de carbone, de NBR hydrogéné (HNBR), de fluoropolymère ou de polyacrylate.

La portion extérieure 9c de l'armature externe 9 présente une extrémité libre 17 qui délimite intérieurement l'ouverture externe 12, ladite extrémité libre étant inscrite dans un plan radial P1 qui est décalé du côté externe par rapport à un plan radial P2 dans lequel est inscrite une face externe 15b de la portion centrale 9b. En particulier, dans les modes de réalisation représentés, la face externe 15b de la portion centrale 9b s'étend radialement.

Ainsi, on forme sur la face externe 15b un logement pour la réception d'un codeur 18, ce qui permet d'équiper le dispositif d'étanchéité 7 d'un tel codeur sans impacter l'encombrement axial dudit dispositif. En particulier, la longueur radiale de la face externe 15b et la valeur du décalage entre les plans radiaux P1, P2 définissent le volume disponible pour le codeur 18.

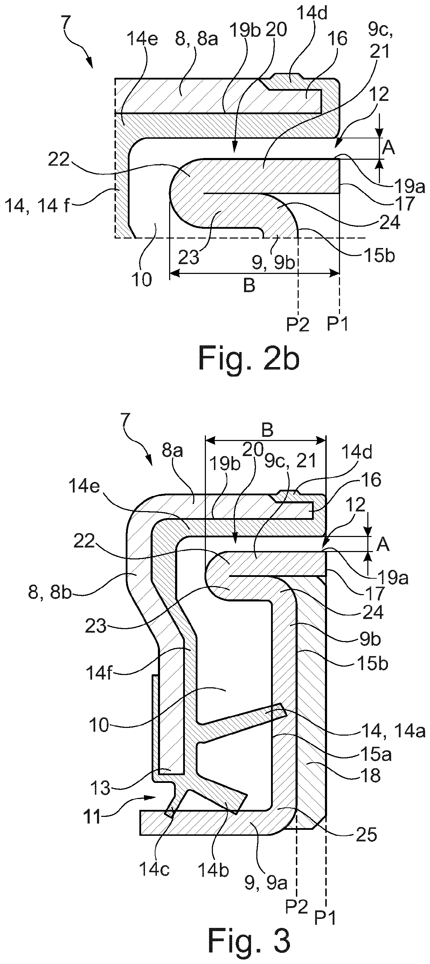

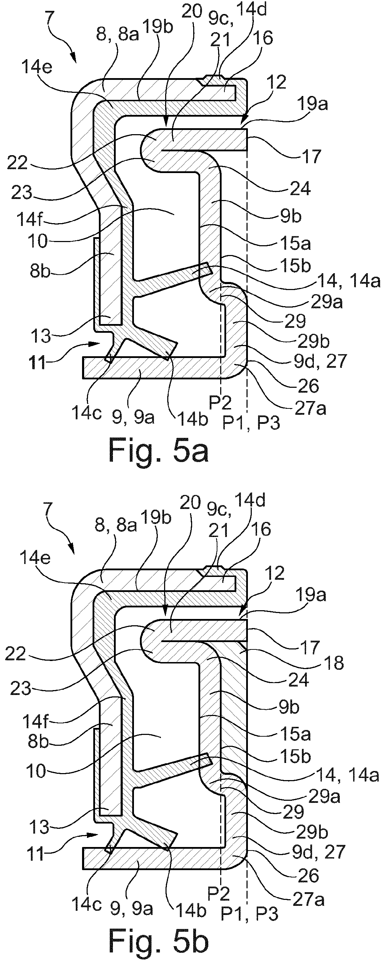

Sur les figures 3, 4b, 5b et 6b, le dispositif d'étanchéité 7 est équipé d'un codeur 18 qui est associé sur la face externe 15b de la portion centrale 9b, ledit codeur présentant une épaisseur axiale qui est inférieure ou égale au décalage entre les plans radiaux P1, P2 dans lesquels sont inscrites respectivement ladite face externe et l'extrémité libre 17.

En particulier, le codeur 18 représenté sur les figures présente une épaisseur qui est sensiblement égale au décalage des plans radiaux P1, P2, ce qui permet, dans l'encombrement axial défini par le plan P1, de maximiser la puissance du signal émis par ledit codeur.

Par ailleurs, le codeur 18 ne s'étend pas au-delà de l'extrémité libre 17 afin de ne pas être disposé dans l'ouverture externe 12 de la chambre d'étanchéité 10. Ainsi, le dispositif d'étanchéité 7 présente des performances d'étanchéité qui sont indépendantes de la présence ou non d'un codeur 18. Dans les modes de réalisation représentés, la portion extérieure 9c de l'armature externe 9 est dépourvue de codeur.

Sur la figure 1, le palier à roulement comprend deux dispositifs d'étanchéité respectivement gauche 7g et droit 7d, la face externe 15b de la portion centrale 9b de l'armature externe 9 de droite étant équipée d'un codeur 18, la face externe 15b de la portion centrale 9b de l'armature externe 9 de gauche étant dépourvue de codeur.

Le codeur 18 peut être formé d'un aimant annulaire, notamment formé d'une matrice annulaire, par exemple réalisée à base d'un matériau plastique ou élastomère, dans laquelle sont dispersées des particules magnétiques, par exemple des particules de ferrite ou de terres rares comme le NdFeB. En particulier, la matrice peut être surmoulée sur la face externe 15b de la portion centrale 9b, ce qui permet de faciliter son association à l'armature externe 9, et donc au dispositif d'étanchéité 7.

L'ouverture externe 12 est formée entre les portions extérieures 8a, 9c respectives des armatures interne 8 et externe 9, la portion extérieure 8a de l'armature interne 8 délimitant extérieurement ladite ouverture externe.

Pour ce faire, les portions extérieures 8a, 9c présentent chacune une paroi axiale respectivement extérieure 19a (pour l'armature externe 9) et intérieure 19b (pour l'armature interne 8), les parois axiales 19a, 19b étant disposées en regard radial en formant un jeu réduit A définissant un conduit annulaire 20 s'étendant sur une longueur axiale B et par lequel la chambre annulaire 10 débouche dans l'ouverture externe 12.

Les parois axiales 19a, 19b présentent toutes deux des dimensions suffisamment importantes pour conférer à la longueur axiale B une dimension maximale, afin d'améliorer l'étanchéité du dispositif 7 au niveau de l'ouverture externe 12. En particulier, les paramètres A et B sont indépendants de la présence ou non du codeur 18, lesdits paramètres définissant la géométrie et donc les performances de la chicane d'entrée dans la chambre 10.

En particulier, l'agencement proposé permet d'obtenir un conduit annulaire 20 dont la longueur axiale B est importante, notamment en étant supérieure à la somme du décalage axial entre les plans P1 et P2 et de l'épaisseur de la portion centrale 9b de l'armature externe 9, ce qui permet de cumuler une amélioration de l'étanchéité avec une invariabilité de la lèvre 14a avec ou sans codeur 18.

Pour réduire la dimension radiale du jeu A, et ainsi limiter le risque l'entrée de polluants extérieurs dans la chambre annulaire 10, l'élément d'étanchéité 14 est équipé d'un voile extérieur 14e qui est associé sur la paroi axiale intérieure 19b, notamment en étant formé d'une seule pièce avec le bourrelet 14d d'étanchéité statique.

L'élément d'étanchéité 14 comprend en outre un voile intérieur 14f qui s'étend sur la portion intérieure 8b de l'armature interne 8, en étant formé d'une seule pièce avec, d'une part, le voile extérieur 14e délimitant le conduit externe 20 et, d'autre part, avec les lèvres 14a, 14b, 14c d'étanchéité dynamique disposées dans la chambre annulaire 10.

Dans les modes de réalisation représentés, la portion extérieure 9c présente un segment extérieur 21 sur lequel est formée la paroi axiale 19a délimitant l'ouverture externe 12, ledit segment extérieur s'étendant axialement entre une extrémité interne 22 et l'extrémité libre 17. Par ailleurs, le segment axial 21 est relié à la portion centrale 9b par un segment 23 de liaison.

En particulier, le segment de liaison 23 présente un segment intérieur qui s'étend axialement entre une extrémité externe 24 en L de liaison avec la portion centrale 9b et une extrémité interne 22 en U de liaison avec le segment extérieur 21.

De façon avantageuse, les segments extérieur 21 et intérieur 23 sont accolés radialement, ce qui permet de limiter la dimension radiale de l'armature externe 9, mais également d'augmenter la rigidité de ladite armature externe.

Sur les figures 1, 2a et 3, la portion centrale 9b est directement reliée à la portion 9a de fixation sur l'organe intérieur 2, notamment par l'intermédiaire d'une extrémité intérieure 25 en L.

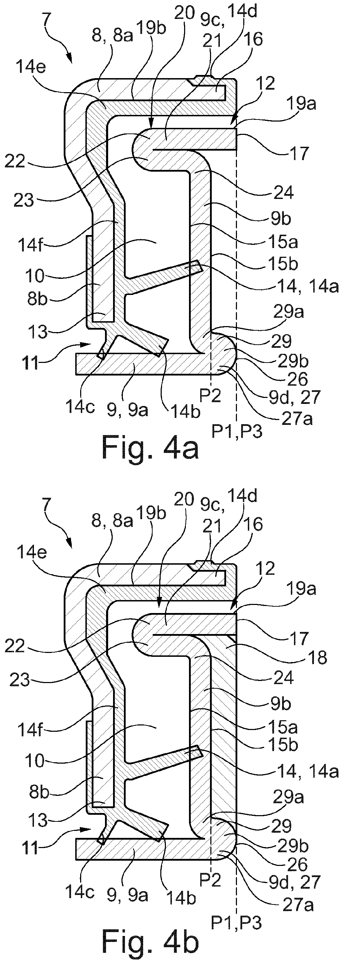

Sur les figures 4a, 4b, 5a, 5b, 6a et 6b, la portion centrale 9b est reliée à la portion de fixation 9a par l'intermédiaire d'une portion intérieure 9d de l'armature externe 9, ladite portion intérieure présentant une face externe 26 qui est inscrite dans un plan radial P3 qui est décalé du côté externe par rapport au plan radial P2 dans lequel est inscrite la face externe 15b de la portion centrale 9b.

Ainsi, on forme avec la face externe 26 une zone d'appui pour l'outil 28 de montage du dispositif 7 qui est proche de l'organe intérieur 2 tout en étant décalée de la face externe 15b pour l'association d'un codeur 18. Cet agencement permet d'éviter un appui de l'outil 28 sur le codeur 18 lorsque le dispositif d'étanchéité 7 en est équipé, mais surtout d'utiliser un même outil 28 pour monter le dispositif 7 sur le palier, qu'il soit ou non équipé d'un codeur 18.

L'extrémité libre 17 et la face externe 26 sont sensiblement inscrites dans le même plan radial P1, P3, afin que l'outil 28 de montage du dispositif d'étanchéité 7 puisse appuyer simultanément sur elles lors de l'assemblage du palier, comme représenté sur les figures 6a et 6b.

Pour éviter un appui de l'outil 28 sur le codeur 18, le codeur 18 présente une épaisseur axiale qui est inférieure ou égale au décalage entre les plans radiaux P2, P3 entre lesquels sont inscrits les faces externes 15b, 26 des portions respectivement centrale 9b et intérieure 9d. De même, la portion intérieure 9d de l'armature externe 9 est dépourvue de codeur.

La portion intérieure 9d présente un segment 27 portant la face externe 26, ledit segment présentant une extrémité interne 27a en L de liaison avec la portion de fixation 9a. En particulier, dans les modes de réalisation représentés, le segment 27 portant la face externe 26 s'étend radialement.

La portion intérieure 9d présente en outre un segment extérieur 29 qui s'étend axialement entre une extrémité interne 29a en L de liaison avec la portion centrale 9b et une extrémité externe 29b en L de liaison avec le segment 27 portant la face externe 26.

De façon avantageuse, comme représenté sur les figures 4a, 4b, 6a et 6b, le segment extérieur 29 est accolé radialement autour de la portion de fixation 9a, ce qui permet d'augmenter la rigidité de la portion intérieure 9d, et ainsi de limiter sa déformation lors de l'appui sur elle de l'outil de montage 28.

En relation avec les figures 6a et 6b, on décrit à présent un procédé de montage d'un dispositif d'étanchéité 7 dans un côté 6 d'un espace de roulement 4 d'un palier à roulement tel que décrit précédemment.

Avant le montage du dispositif d'étanchéité 7 sur le palier à roulement, les armatures interne 8 et externe 9 sont préassemblées en formant entre elles la chambre annulaire 10 d'étanchéité. Pour ce faire, un lubrifiant sous forme de graisse peut être disposé dans la chambre d'étanchéité 10, afin d'assurer à la fois la lubrification de ladite chambre et de contribuer à la cohésion des armatures 8, 9 lors de leur montage.

Après disposition des armatures 8, 9 préassemblées en regard axial du côté 6 de l'espace de roulement 4, le procédé prévoit de mettre un outil 28 en appui sur la portion intérieure 9d de l'armature externe 9 et sur l'armature interne 8 pour appliquer un effort de déplacement axial desdites armatures dans ledit côté sur une course de fixation de chacune desdites armatures à un organe 1, 2.

Pour ce faire, l'outil 28 présente une portée d'appui 30 qui s'étend dans un plan radial P, ladite portée présentant une dimension radiale qui est supérieure à la dimension radiale de la portion intérieure 9d.

En particulier, dans le mode de réalisation représenté, la portée d'appui 30 est agencée pour appliquer l'effort de déplacement conjointement sur la portion intérieure 9d et sur l'extrémité libre 17 de l'armature externe 9, ce qui permet de faciliter le déplacement de ladite armature externe sur sa course de fixation à l'organe 2.

## Revendications

1. Palier à roulement comprenant deux organes (1, 2) et des corps roulants (3) disposés dans un espace de roulement (4) formé entre lesdits organes pour permettre leur rotation relative autour d'un axe, au moins un côté (6) de l'espace de roulement (4) étant équipé d'un dispositif d'étanchéité (7, 7g, 7d) comprenant une armature interne (8) et une armature externe (9), lesdites armatures étant solidaires de respectivement un organe (1, 2) en formant entre elle une chambre annulaire (10) en communication avec, d'une part, l'espace de roulement (4) par une ouverture interne (11) et, d'autre part, avec l'extérieur par une ouverture externe (12), ladite armature externe présentant une portion centrale (9b) reliée, d'une part, à une portion intérieure (9a) de fixation à l'organe (2) et, d'autre part, à une portion extérieure (9c), ledit palier étant **caractérisé en ce que** la portion extérieure (9c) présente un segment extérieur (21) qui s'étend axialement entre une extrémité interne (22) et une extrémité libre (17) en délimitant intérieurement l'ouverture externe (12), ladite extrémité libre étant inscrite dans un plan radial (P1) qui est décalé du côté externe par rapport à un plan radial (P2) dans lequel est inscrite une face externe (15b) de la portion centrale (9b).

2. Palier à roulement selon la revendication 1, **caractérisé en ce que** le segment axial (21) est relié à la portion centrale (9b) par un segment de liaison (23).

3. Palier à roulement selon la revendication 2, **caractérisé en ce que** le segment de liaison (23) présente un segment intérieur qui s'étend axialement entre une extrémité externe (24) en L de liaison avec la portion centrale (9b) et une extrémité interne (22) en U de liaison avec le segment extérieur (21).

4. Palier à roulement selon la revendication 3, **caractérisé en ce que** les segments extérieur (21) et intérieur (23) sont accolés radialement.

5. Palier à roulement selon l'une quelconque des revendications 1 à 4, **caractérisé en ce que** l'armature interne (8) présente une portion extérieure (8a) de fixation à l'organe (1), ladite portion délimitant extérieurement l'ouverture externe (12).

6. Palier à roulement selon la revendication 5, **caractérisé en ce que** les portions extérieures (9c, 8a) présentent chacune une paroi axiale (19a, 19b), lesdites parois étant disposées en regard radial en formant un jeu réduit (A) définissant un conduit annulaire (20) s'étendant sur une longueur axiale (B) et par lequel la chambre annulaire (10) débouche dans l'ouverture externe (12).

7. Palier à roulement selon la revendication 6, **caractérisé en ce que** la longueur axiale (B) est supérieure à la somme du décalage axial entre les plans (P1) et (P2) et de l'épaisseur de la portion centrale (9b) de l'armature externe (9).

8. Palier à roulement selon l'une quelconque des revendications 1 à 7, **caractérisé en ce que** l'armature interne (8) porte un élément d'étanchéité (14) qui est disposé dans la chambre annulaire (10), ledit élément présentant au moins une lèvre (14a, 14b, 14c) qui est disposée en contact frottant sur l'armature externe (9).

9. Palier à roulement selon l'une quelconque des revendications 1 à 8, **caractérisé en ce que** la portion centrale (9b) est reliée à la portion de fixation (9a) par l'intermédiaire d'une portion intérieure (9d) de l'armature externe (9), ladite portion intérieure présentant une face externe (26) qui est inscrite dans un plan radial (P3) qui est décalé du côté externe par rapport au plan radial (P2) dans lequel est inscrite la face externe (15b) de la portion centrale (9b).

10. Palier à roulement selon la revendication 9, **caractérisé en ce que** l'extrémité libre (17) et la face externe (26) sont inscrites sensiblement dans le même plan radial (P1, P3).

11. Palier à roulement selon l'une des revendications 9 ou 10, **caractérisé en ce que** la portion intérieure (9d) présente un segment extérieur (29) qui s'étend axialement entre une extrémité interne (29a) en L de liaison avec la portion centrale (9b) et une extrémité externe (29b) en L de liaison avec un segment (27) portant la face externe (26).

12. Palier à roulement selon l'une quelconque des revendications 9 à 11, **caractérisé en ce que** la portion intérieure (9d) présente un segment (27) portant la face externe (26), ledit segment présentant une extrémité interne (27a) en L de liaison avec la portion de fixation (9a).

13. Palier à roulement selon l'une quelconque des revendications 1 à 12, **caractérisé en ce que** le dispositif d'étanchéité (7) est équipé d'un codeur (18) qui est associé sur la face externe (15b) de la portion centrale (9b), ledit codeur présentant une épaisseur axiale qui est inférieure ou égale au décalage entre les plans radiaux (P1, P2) dans lesquels sont inscrits respectivement ladite face externe et l'extrémité libre (17).

14. Palier à roulement selon la revendication 13, **caractérisé en ce que** la portion extérieure (9c) de l'armature externe (9) est dépourvue de codeur.

15. Palier à roulement selon l'une des revendication 13 ou 14 lorsqu'elle dépend de la revendication 9, **caractérisé en ce que** le codeur (18) présente une épaisseur axiale qui est inférieure ou égale au décalage entre les plans radiaux (P2, P3) dans lesquels sont inscrits les faces externes (15b, 26) des portions respectivement intérieure (9d) et centrale (9b).

16. Palier à roulement selon la revendication 15, **caractérisé en ce que** la portion intérieure (9d) de l'armature externe (9) est dépourvue de codeur.

17. Palier à roulement selon l'une quelconque des revendications 13 à 16, **caractérisé en ce que** l'épaisseur du codeur (18) est sensiblement égale au décalage des plans radiaux (P1, P2).

18. Palier à roulement selon l'une quelconque des revendications 13 à 17, **caractérisé en ce qu'**il comprend deux dispositifs d'étanchéité (7, 7g, 7d) présentant les même armatures respectivement externes (9) et internes (8), chaque côté (6) de l'espace de roulement (4) étant équipé d'un desdits dispositifs d'étanchéité, la face externe (15b) de la portion centrale (9b) d'une armature externe (9) étant équipée d'un codeur (18), la face externe (15b) de la portion centrale (9b) de l'autre armature externe (9) étant dépourvue de codeur.

19. Procédé de montage d'un dispositif d'étanchéité (7) dans un côté (6) de l'espace annulaire (4) d'un palier à roulement selon l'une quelconque des revendications 9 à 18, dans lequel les armatures (8, 9) sont préassemblées en formant entre elles la chambre annulaire (10), et, après disposition desdites armatures préassemblées en regard axial dudit côté, un outil (28) est mis en appui sur la portion intérieure (9d) de l'armature externe (9) et sur l'armature interne (8) pour appliquer un effort de déplacement axial desdites armatures dans ledit côté sur une course de fixation de chacun desdites armatures à un organe (1, 2).

20. Procédé de montage selon la revendication 19, **caractérisé en ce que** l'outil (28) présente une portée d'appui (30) qui s'étend dans un plan radial (P), ladite portée présentant une dimension radiale qui est supérieure à la dimension radiale de la portion intérieure (9d).

21. Procédé de montage selon la revendication 20, **caractérisé en ce que** la portée d'appui (30) est agencée pour appliquer l'effort de déplacement conjointement sur la portion intérieure (9d) et sur l'extrémité libre (17) de l'armature externe (9).
